# EUROPEAN PATENT APPLICATION

(11) **EP 3 741 530 A1**
(43) Date of publication of application: **25.11.2020**
(21) Application number: 18725382.8
(22) Date of filing: 19.01.2018
(51) Int. Cl.: B27K 3/52, B27N 3/02, B27N 1/02, B27K 5/00, C09K 21/04

(54) **FLAME-RETARDANT COMPOSITION FOR MANUFACTURING FUNCTIONAL, ECO-FRIENDLY PARTICLE BOARD AND PREPARATION METHOD THEREFOR**

(30) Priority: 29.12.2017 KR 20170183736
(71) Applicant: Young Shin Furniture and Space Co., Ltd., Gyeongsan-si, Gyeongsangbuk-do 38696 (KR); Bae, Young Ho, Suseong-gu, Daegu 42278 (KR)
(72) Inventor: SO, Kwang Hui, Dalseo-gu, Daegu 42649 (KR); NAM, Chul Woo, Nam-gu, Daegu 42419 (KR)
(74) Representative: Dehns
(86) International application number: PCT/KR2018/000883
(87) International publication number: WO 2019/132097

(57) **Abstract**

Disclosed is a composition for manufacturing an eco-friendly functional particle board. More particularly, a composition for manufacturing an eco-friendly functional particle board including water, a melamine resin, a flame retardant, an auxiliary flame retardant, a smoke suppressant, a particle-board strength reinforcing agent, a desiccant, an antibacterial agent, a coupling agent, a preservative, and a penetrant is provided. It was confirmed that an eco-friendly functional particle board manufactured using the composition of the present disclosure had excellent antibacterial activity, fungal resistance, flame retardancy, bactericidal properties, improved odors, tensile strength, burst strength, and flexural strength and exhibited a remarkably reduced volatile organic compound emissions.

## Description

### CROSS-REFERENCE TO RELATED APPLICATION

This application claims priority to and the benefit of Korean Patent Application No. 2017-0183736, filed on December 29, 2017, the disclosure of which is incorporated herein by reference in its entirety.

### BACKGROUND

### 1. Field of the Invention

The present disclosure relates to a flame-retardant composition for manufacturing an eco-friendly functional particle board and a method of manufacturing the same.

### 2. Discussion of Related Art

Conventional particle boards (hereinafter referred to as "PBs") are processed materials produced by breaking waste materials which remain after manufacturing timber from wood, construction waste materials, waste materials from furniture, wood by-products, etc., into small pieces and mixing the broken waste materials with an adhesive, followed by compression at high temperature under high pressure. The amount of waste wood used for the production of such PBs is 11,260,400 m³, which is about 40% of the domestic demand for timber of 28,151,000 m³/year (in 2015).

In addition, PBs have generally been manufactured by aggregating wood chips into lumps by mixing them with a thermosetting synthetic resin-based adhesive. When PB is produced in such a manner, formaldehyde, which is a causative substance of atopic dermatitis, may be emitted and volatile organic compounds (VOCs) may be emitted from a binder used for attaching sheets or films to surfaces of PBs. Accordingly, PBs have been recognized as very harmful due to disadvantages such as the emission of toxins that are harmful to the human body.

Since PBs are produced using waste wood, the strength thereof is low. For this reason, they are often discolored, worn, or cracked due to decomposition or exposure to wind and rain. Further, the strength and durability of PBs can be weakened due to termites and other insects, thereby becoming highly combustible. In addition, there is a theory that a PB can absorb moisture up to 30% of the weight thereof, although the amount of water molecules (H₂O) absorbed or dampproofed by cellulose and hemicellulose, which occupy 70% or more of the cell walls of wood, depends upon relative humidity and temperature.

In addition, in the case of furniture, desks, kitchen furniture (sinks), and built-in furniture which are processed using PB, the adhesive strength of an adhesive film or sheet, as a finishing material, is often decreased over time, whereby the film or sheet is peeled off. When moisture penetrates a PB plate through the peeled parts, PB chips expand and, accordingly, the binding force thereamong is rapidly decreased, whereby the PB plate may be distorted. Further, bacteria and molds may proliferate therein, which may cause sanitation problems. Therefore, there is a need for a composition for producing a novel functional PB capable of compensating for or addressing the aforementioned problems.

### SUMMARY OF THE INVENTION

Therefore, the present disclosure has been made in view of the above problems of conventional PBs, and the present inventors have completed the present disclosure based on the finding that a PB manufactured using the composition proposed in the present disclosure has eco-friendly characteristics along with flame retardancy and high durability.

In particular, it is an object of the present disclosure to provide a composition for manufacturing an eco-friendly functional PB.

It will be understood that technical problems of the present disclosure are not limited to the aforementioned problems, and other technical problems not referred to herein will be clearly understood by those skilled in the art from disclosures below.

In accordance with an aspect of the present invention, the above and other objects can be accomplished by the provision of a composition for manufacturing an eco-friendly functional PB, the composition including: water, a melamine resin, a flame retardant, an auxiliary flame retardant, a smoke suppressant, a PB strength reinforcing agent, a desiccant, an antibacterial agent, a coupling agent, a preservative, and a penetrant.

As an embodiment of the present disclosure, the water is included in an amount of 10 to 15% by weight.

As another embodiment of the present disclosure, the flame retardant is prepared by mixing ammonium polyphosphate and silane-coated ammonium polyphosphate in a ratio of 2 : 1, and the flame retardant is included in an amount of 20 to 25% by weight.

As still another embodiment of the present disclosure, the auxiliary flame retardant is ammonium sulfate and included in an amount of 0.8 to 1.2% by weight.

As still another embodiment of the present disclosure, the smoke suppressant is prepared by mixing boric acid, zinc carbonate, and magnesium hydroxide in a weight ratio of 1 : 2 : 1 and included in an amount of 0.6 to 0.9% by weight.

As still another embodiment of the present disclosure, the PB strength reinforcing agent is prepared by mixing aerogel and pyrophyllite in a volume ratio of 1 : 1 and included in an amount of 0.5 to 0.9% by weight.

As still another embodiment of the present disclosure, the desiccant is a flowing paraffin wax and included in an amount of 0.6 to 1% by weight.

As still another embodiment of the present disclosure, the antibacterial agent (bactericide) is a combination of 1.08% by weight of a silver nanoparticle solution and 0.94% by weight of a titanium dioxide nanoparticle solution.

As still another embodiment of the present disclosure, the coupling agent is an acrylic phosphate-based coupling agent and included in an amount of 0.75 to 0.9% by weight.

As still another embodiment of the present disclosure, the preservative is copper sulfate and included in an amount of 0.9 to 1.2% by weight.

As still another embodiment of the present disclosure, the penetrant is alkyl succinate and included in an amount of 0.8 to 1.0% by weight.

As still another embodiment of the present disclosure, the composition is prepared by stirring and dissolving at 1,200 rpm for 10 to 30 minutes and then aging at 20 to 30 °C for 6 to 10 hours.

As still another embodiment of the present disclosure, the penetrant is alkyl succinate.

In accordance with another aspect of the present invention, there is provided an eco-friendly functional PB manufactured using the composition.

In accordance with yet another aspect of the present invention, there is provided a method of manufacturing an eco-friendly functional PB, the method including:
1) a step of feeding PB chips into an automatic machine for mixing and coating, and then adding the composition prepared by the above-described method to the automatic machine in an amount of 32.50 to 48.70% by weight based on the weight of the particle chips and coating the particle chips with the composition for 5 to 10 minutes;
2) a step of placing the coated chips in a hot press having an upper-plate temperature of 100 to 120 °C and a lower-plate temperature of 110 to 155 °C and thermally pressing the same at 60 to 80 kgf/cm² for 5 to 10 minutes; and
3) a step of performing drying at room temperature for 1 to 3 days, after completing the thermal pressing.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is an image of a pulverizer used to manufacture a PB of the present disclosure;
FIG. 2 is an image of a dryer for a PB;
FIG. 3 is an image of dried PBs in a dryer;
FIG. 4 is an image of a cutter for a PB;
FIG. 5 is an image of a coater for a PB;
FIG. 6 illustrates an antibacterial activity test result of a PB of a comparative example;
FIG. 7 illustrates an antibacterial activity test result of an eco-friendly functional PB of the present disclosure;
FIG. 8 illustrates a fungal resistance rating of a PB of a comparative example;
FIG. 9 illustrates a fungal resistance rating of an eco-friendly functional PB of the present disclosure;
FIG. 10 illustrates a fungal resistance of a PB of a comparative example;
FIG. 11 illustrates a fungal resistance of an eco-friendly functional PB of the present disclosure;
FIG. 12 illustrates a flame retardancy of an eco-friendly functional PB of the present disclosure;
FIG. 13 illustrates a smoke density of a PB of a comparative example, investigated in non-flaming and flaming modes;
FIG. 14 illustrates a smoke density of an eco-friendly functional PB of the present disclosure, investigated in non-flaming and flaming modes;
FIG. 15 illustrates removal rates of total volatile organic compounds (TVOCs), toluene, and formaldehyde of a PB of a comparative example;
FIG. 16 illustrates removal rates of TVOCs, toluene, and formaldehyde of an eco-friendly functional PB of the present disclosure;
FIG. 17 illustrates a flatwise tensile strength of a PB of a comparative example; and
FIG. 18 illustrates a flatwise tensile strength of an eco-friendly functional PB of the present disclosure.

### DETAILED DESCRIPTION OF EXEMPLARY EMBODIMENTS

The present disclosure relates to a composition for manufacturing an eco-friendly functional particle board (hereinafter referred to as "PB") and a method of manufacturing the PB using the composition. The present disclosure has been made to compensate for and address drawbacks and problems of conventional PBs. The present disclosure provides a composition for adding functionality to a PB and providing a PB having improved flame retardancy and reinforced antibacterial activity, fungal resistance, pesticidal property, dampproof property (moisture tolerance), insectproof property, tensile strength, burst strength, and the like.

The present disclosure provides a composition for manufacturing an eco-friendly functional PB. Here, the composition includes water, a melamine resin, a flame retardant, an auxiliary flame retardant, a smoke suppressant, a PB strength reinforcing agent, a desiccant, an antibacterial agent, a coupling agent, a preservative, and a penetrant.

The general properties and formaldehyde emission of functional PBs greatly depend upon a used adhesive type. Accordingly, an adhesive is suitably selected considering the use of PB.

Urea resins are used in U-type PBs, urea melamine resins are used in M-type PBs, and phenol resins are used in P-type PBs. Here, the U-type PBs are mainly used for furniture and the M- and P-type PBs are suitable for construction. Since a melamine resin forms a colorless transparent film when cured, it is widely used in manufacture of floorboards and furniture members, adhesion of veneers, and manufacture of low-pressure melamine panels, high-pressure melamine panels, high-pressure laminates, overlay materials, decorative papers, and balancing papers. A film or coating formed by curing a melamine resin has high water resistance, heat resistance, and chemical resistance. In addition, since a melamine resin is colorless, transparent, and hard, it is widely used as a material of floorboards, roofing boards, and inner walls, and as a crosslinking agent and a PB adhesive.

Products are classified into three types, u, m, and p types, according to a formaldehyde release amount. The formaldehyde release amount standard for released products is prescribed to be 5 mg/L or less.

The standard for formaldehyde emissions was further strengthened. In particular, a product releasing formaldehyde at a level of 0.5 mg/L or less is classified as E0, a product emitting formaldehyde at a level of 1.5 mg/L or less is classified as E1, and a product releasing formaldehyde at a level of 5 mg/L or less is classified as E2. Accordingly, 72.1% or more of PBs and 86.2% or more of MDFs among wood products produced in Korea in 2009 did not satisfy the KS standards, but, currently, a gradually increasing number of products are classified as E1 and E0. Due to strengthened standards and regulations on formaldehyde emissions, methods of reducing the amount of formaldehyde generation are being used. Accordingly, it is required, in the case of the present disclosure, to reduce 0.1% of formaldehyde remaining in a melamine resin adhesive to meet the E0 grade. Accordingly, the melamine resin is included in an amount of 55 to 60% by weight based on 100% by weight of the composition of the present disclosure.

Based on 100% by weight of the composition, 1.5 to 2.5% by weight of an antibacterial agent (1.08% by weight of silver nanoparticles and 0.94% by weight of titanium dioxide nanoparticles (nano-TiO₂)) may be included. In this case, antibacterial activity, fungal resistance, pesticidal property, and formaldehyde (CH₂O) and volatile organic compounds (VOCs) removal function for are excellent.

Since the functional PB of the present disclosure is manufactured using processed wood made by reprocessing furniture waste materials, wood by-products, or the like, not hardwood, it has a very low ignition point. Accordingly, when the functional PB is ignited, it easily burns. To provide high flame retardancy, a 2 : 1 mixture of ammonium polyphosphate (APP) and silane-coated ammonium polyphosphate has been used.

Ammonium polyphosphate (water-soluble APP) has a problem regarding water resistance and, when exposed to high temperature and high humidity conditions, may cause a bleeding problem. In addition, ammonium polyphosphate has low heat resistance and thus melts well at around 90 to 110 °C, exhibiting no adhesiveness and solution viscosity at all. Accordingly, there are many problems in using ammonium polyphosphate alone. To address the problems, various attempts have been made. In particular, when a surface of an ammonium polyphosphate powder is coated with a melamine-based compound, the specific gravity increases, precipitation easily occurs, dispersibility is poor, the ammonium polyphosphate powder becomes sticky, and drying property is poor.

On the other hand, ammonium polyphosphate coated with a silane-based substance exhibits satisfactory dispersibility and precipitability. To increase binding force among particle chips, adjust the viscosity of ammonium polyphosphate, and increase the binding force of ammonium polyphosphate, ammonium polyphosphate (APP) and silane-coated ammonium are mixed in a ratio of 2 : 1, and the resultant mixture is used in an amount of 20 to 25% by weight. Ammonium sulfate [(NH₄)₂SO₄], as an auxiliary flame retardant, may be included in an amount of 0.8 to 1.2% by weight.

When an additive including sulfur is mixed and treated with the composition of the present disclosure, polymetaphosphoric acid is generated by pyrolysis during combustion. The polymetaphosphoric acid forms a protective layer and a carbon film generated by dehydration when polymetaphosphoric acid is generated blocks oxygen, to provide high flame retardancy. In addition, ammonium polyphosphate exhibits excellent metal ion deodorizing effect, dispersive action, and crystal formation prevention effect. Further, ammonium polyphosphate prevents precipitation of a poorly soluble substance into crystals and pH change. In addition, ammonium polyphosphate and silane-coated polyphosphoric acid are mixed and injected in a total amount of 20 to 25% by weight, thereby improving flame retardancy.

The PB is a processed material manufactured by breaking waste wood, building waste materials, furniture waste materials, and wood by-products into small pieces and mixing these pieces with an adhesive, followed by compression under high temperature and high pressure conditions. Accordingly, there is a high possibility that such a particle will generate a large amount of harmful smoke (gas) when combustion heat is lowered due to the endothermic reaction of the board during combustion or when a reaction such as dehydration is carried out through pyrolysis and that the density of the smoke is high.

A smoke suppressant for suppressing harmful smoke (gas) generation included in the present disclosure is prepared by mixing boric acid (3 g), 10 mL (11 g) of zinc carbonate, and 5 mL (5.5 g) of magnesium hydroxide (Mg(OH)₂) in a ratio of 1 : 2 : 1. First, 50 mL of water was fed into a beaker, and 5 mL (3 g) of boric acid (H₃BO₃) was added thereto, followed by heating at 80 to 105 °C for 30 minutes such that a saturated solution was prepared. 10 mL (11 g) of basic zinc carbonate (ZnCO₃) was added to the saturated boric acid solution, and 5 mL (5.5 g) of magnesium hydroxide (Mg(OH)₂) was added thereto while continuously stirring at 1,200 rpm, followed by boiling for 1.0 hour and then being allowed to stand for 6 hours. As a result, white columnar crystals were obtained. The obtained crystals were dried. The dried crystals were used in an amount of 0.6 to 0.9% by weight. In addition, orthoboric acid included in the smoke suppressant is easily dissolved in warm water and is slightly acidic. In addition, orthoboric acid exhibits weak sterilizing action and antiseptic properties. Due to such bactericidal properties, orthoboric acid exhibits a natural insect repellent function, a fungal growth inhibition function, and high resistance to termites. The smoke suppressant has high flame retardancy, good bactericidal properties, high fungal resistance and termite resistance as well as a good smoke suppression function.

PB is manufactured using waste residue after production of plywood, waste residue after production of lumber, chips for pulp, scobs from lumber, sawdust, waste residue after woodworking, waste furniture, waste residue after wooden house construction, waste residue from apartment sample houses, etc. When such waste residues are used, strength is low and contraction and expansion may occur according to moisture change. To address such drawbacks, particle chip parts with low strength are coated to be imparted with reinforced tensile strength, water resistance, moisture resistance and for preservation. For this purpose, 0.113 g of aerogel is mixed with 0.088 g of pyrophyllite to prepare a mixed powder. The resultant powder may be included in an amount of 0.5 to 0.9% by weight.

The aerogel used as a PB strength reinforcing agent is a highly porous nanostructure having a specific surface area of 600 to 1,500 m²/g and is composed of nanoparticles having a size of 1 to 50 nm. Since aerogel has a porous structure, it exhibits excellent insulation and soundproofing. In addition, since aerogel has excellent shock damping property, it may prevent breakage. When aerogel is mixed with pyrophyllite, strength thereof increases. In addition, aerogel increases adhesive strength so that particle chips are satisfactorily attached to each other. Further, aerogel improves a flatwise strength, thermal deformation, and long-term deformation by load. Pyrophyllite has a waxy texture, functions as a fire-resistant material and a filler, and is satisfactorily mixed with aerogel.

In the case of furniture, desks, kitchen furniture (sinks), and built-in furniture which are processed using PB, the adhesive strength of an adhesive sheet or film used as a finishing material is often decreased over time. When moisture builds up inside a PB plate, particle chips expand and, accordingly, the binding force thereamong is rapidly decreased, whereby the PB plate may be distorted. Further, bacteria and molds may proliferate therein, which may cause sanitation problems. Accordingly, to compensate for the problems, a flowing paraffin wax is allowed to penetrate into particle chips or applied on a surface of the PB plate as a coating to improve moisture resistance. In addition, the flowing paraffin wax reduces water content and delays dimensional changes without altering the function of particle chips, and improves water resistance and moisture resistance. In addition, the flowing paraffin wax is added in an amount of 0.6 to 1% by weight to increase moisture resistance and water resistance.

An antimicrobial agent contained in the composition of the present disclosure is an inorganic antimicrobial agent. The functions of silver nanoparticles and titanium dioxide nanoparticles, which are metal particles with excellent antibacterial activity, fungal resistance, bactericidal properties, and deodorizing properties, contained in the antimicrobial agent semipermanently last and have high stability, and when the materials are used together, a synergistic effect may be produced.

Silver nanoparticles and titanium dioxide nanoparticles have a large specific surface area and excellent heat resistance. An antimicrobial agent solution is prepared by dissolving silver nanoparticles (included in an amount of 1.08% by weight in the composition) and titanium dioxide nanoparticles (included in an amount of 0.94% by weight in the composition). It was confirmed that the function of the antibacterial agent lasts for a long time and resistant bacteria are not generated when the antimicrobial agent solution is added in an amount of 1.5 to 2.5% by weight, preferably 2.02% by weight.

First, in addition to imparting antibacterial activity, fungal resistance, improved odors and bactericidal properties to a PB and preventing decomposition of a PB, the present disclosure focused on removing 0.1% formaldehyde contained in a melamine resin or a melamine urea resin, as an adhesive used to manufacture a PB, and remaining volatile organic compounds (VOCs) emitted from a solvent of an adhesive of an adhesive sheet attached to a PB surface, thus completing technical task.

Silver nanoparticles, which have strong antimicrobial and sterilizing power, are used as an antibiotic in various fields such as deodorization, removal of formaldehyde (CH₂O) and VOCs, and emission of far-infrared radiation and anions.

The solution prepared by mixing silver nanoparticles with titanium dioxide nanoparticles may remove residual formaldehyde in a melamine resin solution and volatile organic compounds emitted from a binder used to attach a sheet or film, reduce unpleasant odors generated during decomposition due to moisture absorbed into waste wood, prevent damage by termites and other insects or decrease in strength and durability due to such damage, compensate for unpleasant odors, and improve insectproof property (antiseptic property), strength, etc.

A coupling agent included in the composition of the present disclosure is an acrylic phosphate-based coupling agent and is used as a composition for improving binding between the composition of the present disclosure, i.e., a chemical liquid, and particle chips.

Since particle chips exhibit hydrophilicity and the composition, as a chemical solution, exhibits hydrophobicity, binding therebetween is low. Accordingly, a coupling agent is added to improve binding by introducing a new chemical bond at an interface with each of the two materials. Accordingly, the coupling agent increases bending strength and modulus of elasticity and enhances the dimensional stability and impact strength of a product, and adhesion among particle chips. The coupling agent is added in an amount of 0.75 to 0.9% by weight.

A preservative included in the composition of the present disclosure is used to effectively inhibit occurrence of moss, microbes and other contaminants caused by corrosion or decay of a PB interior or surface due to penetration of moisture, provide bactericidal action, and inhibit the growth of insects, termites, and molds that can corrode particle chips. Copper sulfate (CuSO₄), as a preservative, is added in an amount of 0.9 to 1.2% by weight.

As a penetrant included in the composition of the present disclosure, a commercially available penetrant widely used for processing PBs was used. Alkyl succinate, as an anionic penetrant widely used in PBs made of waste wood, was evenly impregnated into waste wood chips, thereby producing a functional PB. The penetrant is added in an amount of 0.8 to 1% by weight based on 100% by weight of the composition.

According to an embodiment of the present disclosure, the PB is used as a material for the group consisting of furniture, desks, kitchen sinks, and built-in cabinets and is made of a material selected from the group consisting of a PB material made of waste wood, a PB material made of a mixture of waste wood and straw, a PB material made of a mixture of waste wood and wheat straw, a PB material made of a mixture of waste wood and waste paper, a PB material made of a mixture of waste wood and coarse sawdust, a PB material made of a mixture of waste wood and silvergrass, a PB material made of a mixture of waste wood and bamboo, a PB material made of a mixture of waste wood and corn stover, and a PB material made of a mixture of waste wood and native grass. In addition, the material mixed with the waste wood is used in an amount of 30% by weight based on the weight of the waste wood.

Preferably, a weight ratio of the material to the waste wood is 2 : 8 to 3 : 7.

In addition, the composition of the present disclosure is prepared by stirring at 1,200 rpm for 10 to 30 minutes such that all constituent substances are dissolved and then aging at 20 to 30 °C for 6 to 10 hours. By using the composition, an eco-friendly functional PB may be provided.

In addition, the present disclosure provides a method of manufacturing an eco-friendly functional PB, the method including the following steps:
1) a step of feeding particle chips into an automatic machine for mixing and coating, and then adding the composition prepared by the above-described method to the automatic machine in an amount of 32.50 to 48.70% by weight based on the weight of the particle chips and coating the particle chips with the composition for 5 to 10 minutes;
2) a step of placing the coated chips in a hot press having an upper-plate temperature of 100 to 120 °C and a lower-plate temperature of 110 to 155 °C and thermally pressing the same at 60 to 80 kgf/cm² for 5 to 10 minutes; and
3) a step of performing drying at room temperature for 1 to 3 days, after completing the thermal pressing.

Now, the present disclosure will be described in more detail with reference to the following preferred examples and experimental examples. These examples and experimental examples are provided for illustrative purposes only and should not be construed as limiting the scope and spirit of the present disclosure.

### [Example]

### Example 1. Manufacture of eco-friendly functional PB of present disclosure

### 1.1. Material preparation

To prepare a composition for manufacturing an eco-friendly functional PB, first, a flame retardant, a smoke suppressant, a PB strength reinforcing agent, and an antibacterial agent were prepared.

To provide high flame retardancy, the flame retardant was prepared by mixing ammonium polyphosphate (APP) and silane-coated ammonium polyphosphate in a ratio of 2 : 1. As an auxiliary flame retardant, ammonium sulfate [(NH₄)₂SO₄] was used.

To prepare the smoke suppressant, boric acid (3 g), 10 mL (11 g) of zinc carbonate, and 5 mL (5.5 g) of magnesium hydroxide (Mg(OH)₂) were prepared in a ratio of 1: 2 : 1. 5 mL (3 g) of the prepared boric acid (H₃BO₃) was fed into a beaker containing 50 mL of water, followed by heating at 95 °C for 30 minutes to prepare a saturated solution. 10 mL (11 g) of gaseous zinc carbonate (ZnCO₃) was added to the saturated boric acid solution and, while continuously stirring at 1,200 rpm, 5 mL (5.5 g) of magnesium hydroxide (Mg(OH)₂) was added thereto. Subsequently, the resultant mixture was boiled for 1.0 hour, followed by being allowed to stand for 6 hours. As a result, white columnar crystals were obtained. The obtained crystals were dried.

To prepare the PB strength reinforcing agent, 0.113 g of aerogel (talc) was mixed with 0.088 g of pyrophyllite, thereby preparing a mixed powder. As the antibacterial agent, a mixture of silver nanoparticles and titanium dioxide nanoparticles was used.

### 1.2. Preparation of composition for manufacturing eco-friendly functional PB

To prepare a composition for manufacturing an eco-friendly functional PB according to the present disclosure, a melamine resin was added to water and the flame retardant was added thereto, followed by adding the auxiliary flame retardant thereto. Subsequently, the smoke suppressant, the PB strength reinforcing agent, a desiccant, the antibacterial agent, a coupling agent, a preservative, and a penetrant were added thereto. Addition amounts thereof are summarized in Table 1 below.

**[Table 1]**

| Materials | | Addition amount (% by weight) |
|---|---|---|
| Water | | 10.83 |
| Melamine resin | | 57.74 |
| Flame retardant | Ammonium polyphosphate | 23.364 |
| | Silane-coated ammonium | |
| Auxiliary flame retardant | Ammonium sulfate [(NH₄)₂SO₄] | 1.011 |
| Smoke suppressant | Boric acid | 0.722 |
| | Zinc carbonate | |
| | Magnesium hydroxide | |
| PB strength reinforcing agent | Aerogel | 0.722 |
| | Pyrophyllite | |
| Desiccant | Paraffin wax | 0.8 |
| Antibacterial agent | Silver nanoparticle solution | 1.08 |
| | Titanium dioxide nanoparticle solution | 0.94 |
| Coupling agent | Acrylic phosphate-based coupling agent | 0.87 |
| Preservative | Copper sulfate (CuS0₄₂O) | 1.011 |
| Penetrant | Alkyl succinate | 0.91 |
| Total | | **100** |

The composition was further stirred and dissolved at 1,200 rpm for 20 minutes and aged at room temperature for 8 hours.

### Example 2. Manufacture of PB plate

Particle chips were fed into an automatic machine for mixing and coating, and the composition prepared in Example 1 was added thereto in an exact amount of 40% by weight based on the weight of the particle chips, followed by mixing for 10 minutes such that the composition was allowed to penetrate into and form a coating on the particle chips.

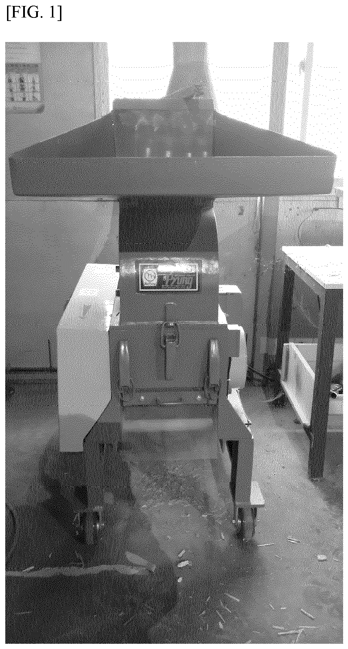

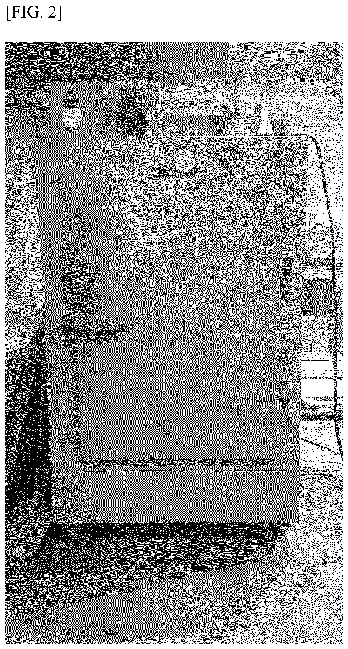

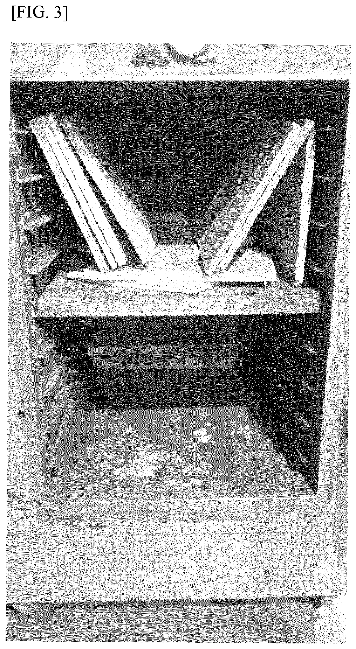

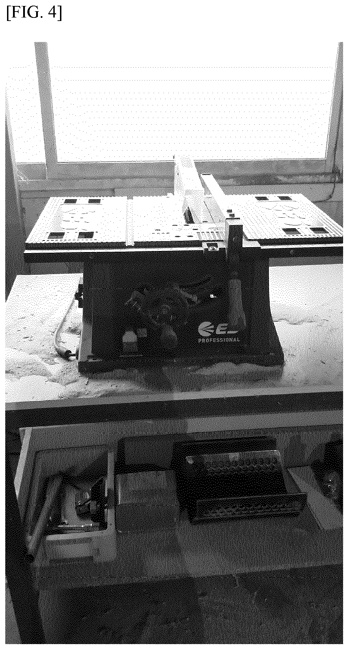

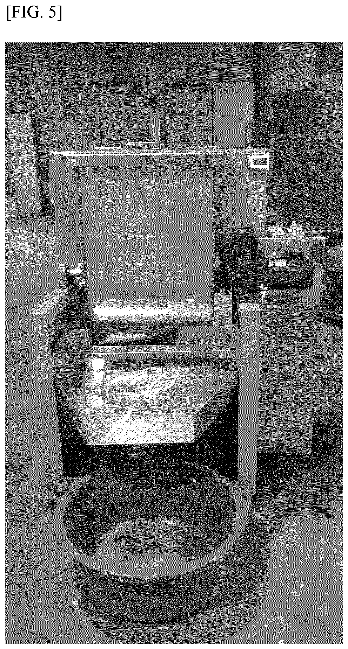

The coated chips were placed in a hot press having an upper-plate temperature of 110 °C and a lower-plate temperature of 145 °C and thermally pressed at 50 kgf/cm² for 5 minutes, followed by drying at room temperature for 3 days to finally complete the manufacturing of a PB. Used apparatuses are illustrated in FIGS. 1 to 5. FIG. 1 is an image of a pulverizer used to manufacture a PB of the present disclosure; FIG. 2 is an image of a dryer for a PB; FIG. 3 is an image of PBs dried in a dryer; FIG. 4 is an image of a cutter for a PB; and FIG. 5 is an image of a coater for a PB.

### Example 3. Antimicrobial activity comparison of PB of comparative example and eco-friendly functional PB of present disclosure

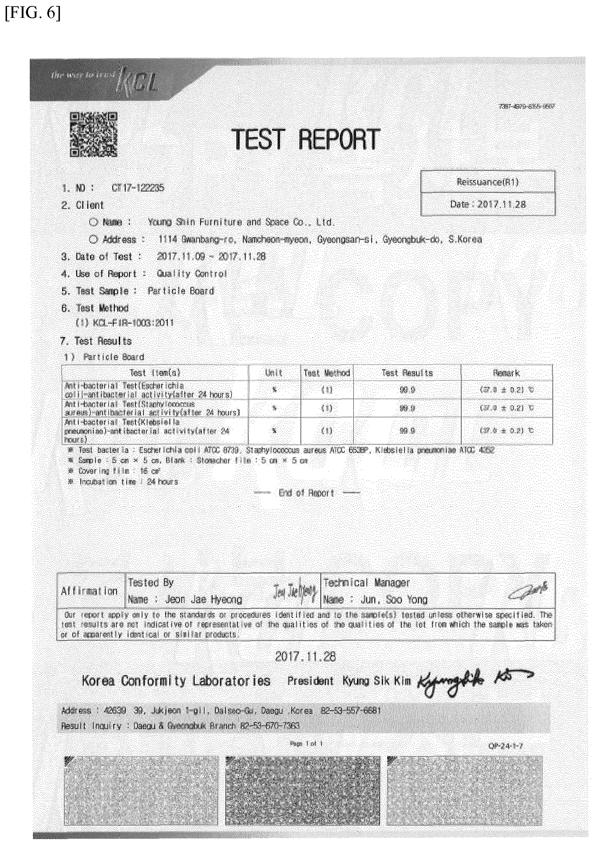

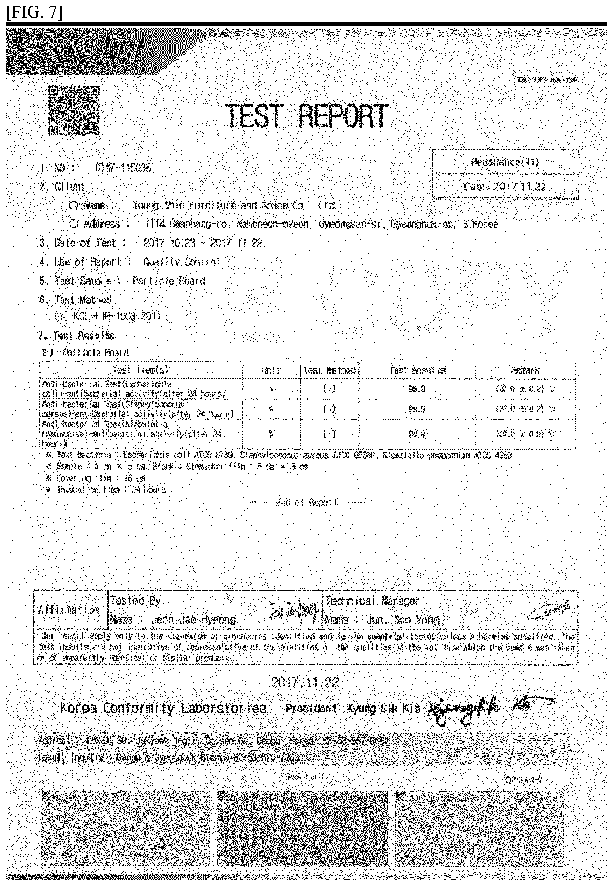

To investigate the function of the functional PB manufactured according to the present disclosure, a functional PB manufactured using a melamine resin (including 0.1% of residual formaldehyde, manufactured by Taeyang Chemical) as a PB adhesive according to a conventional PB manufacturing method without use of the composition of the present disclosure was used as a comparative example. The functional PBs of the comparative example and the present disclosure were subjected to an antimicrobial activity test in accordance with KCL-FiR-1003; 2011. As results, the antibacterial activity against Escherichia coli, Staphylococcus aureus, and Pneumococcus of the comparative example was 99.9% (FIG. 6), and the eco-friendly functional PB of the present disclosure produced the same results as the comparative example (FIG. 7).

In the comparative example, a commercially available melamine resin (including 0.1% of residual formaldehyde, manufactured by Taeyang Chemical) was used as a PB adhesive. Upon use of this melamine resin, there were difficulties in working and workers suffered pain in the eyes, nose and throat. An aqueous formaldehyde solution is sold as a disinfectant, a bactericide, and a preservative in the market. Therefore, the functional PB of the comparative example exhibits the same antimicrobial activity, due to formaldehyde remaining at high-concentration of 0.1% (1,000 ppm) in the melamine resin solution, as that of the eco-friendly functional PB of the present disclosure. Since the residual formaldehyde in the melamine resin used as an adhesive is highly toxic to the human body, it may cause illness upon exposure thereto. It is known that the eyes, nose, and throat are irritated at a formaldehyde concentration of 0.1 ppm or less, and fatal problems, such as a respiratory disorder, occur at a formaldehyde concentration of 0.25 to 0.5 ppm. With regard to this, the standards for formaldehyde emissions and eco-friendly materials were established and regulated by law as follows:
SE0 (Super E₀): 0.3 mg/L or less, top material grade with the lowest amount of formaldehyde emission.
E₀: 0.5 mg/L or less, middle and upper material grade.
E₁: 1.5 mg/L or less, basic grade available for indoor furniture.
E₂: 5 mg/L or less, grade unavailable for indoor furniture.

**[Table 2]**

| Test bacteria | Comparative example | Eco-friendly functional PB of the present disclosure |
|---|---|---|
| Escherichia coli | 99.9% | 99.9% |
| Staphylococcus aureus | 99.9% | 99.9% |
| Pneumococcus | 99.9% | 99.9% |

### Example 4. Fungal resistance rating/fungal resistance comparison of PB of comparative example and eco-friendly functional PB of present disclosure

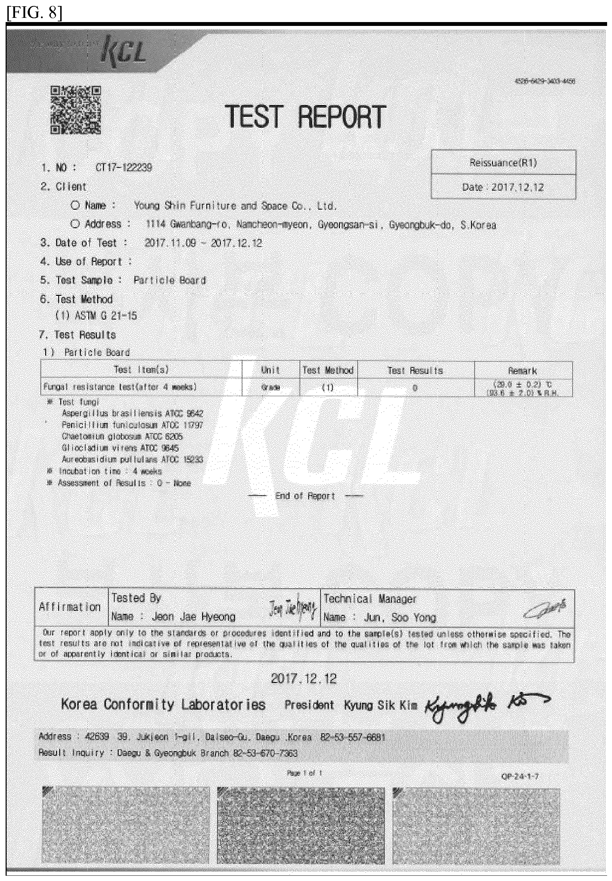

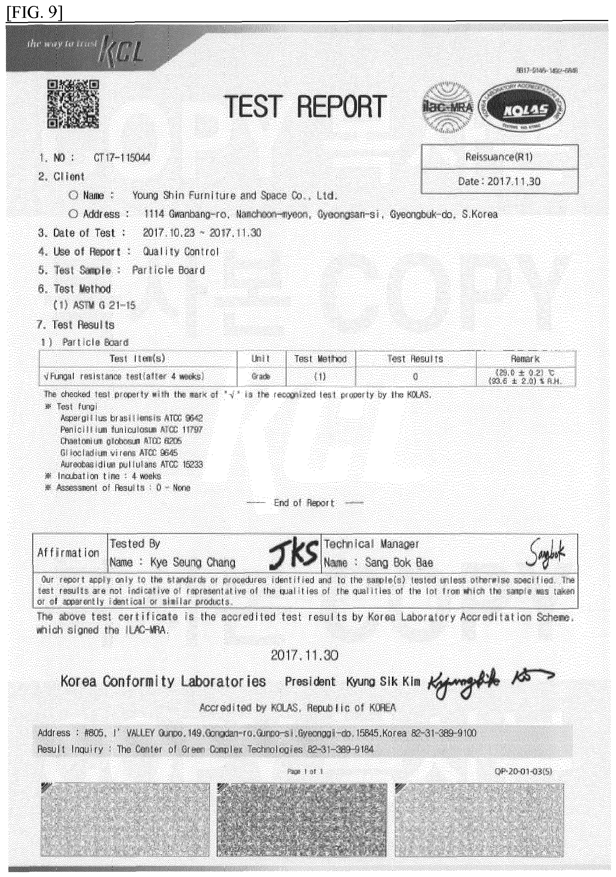

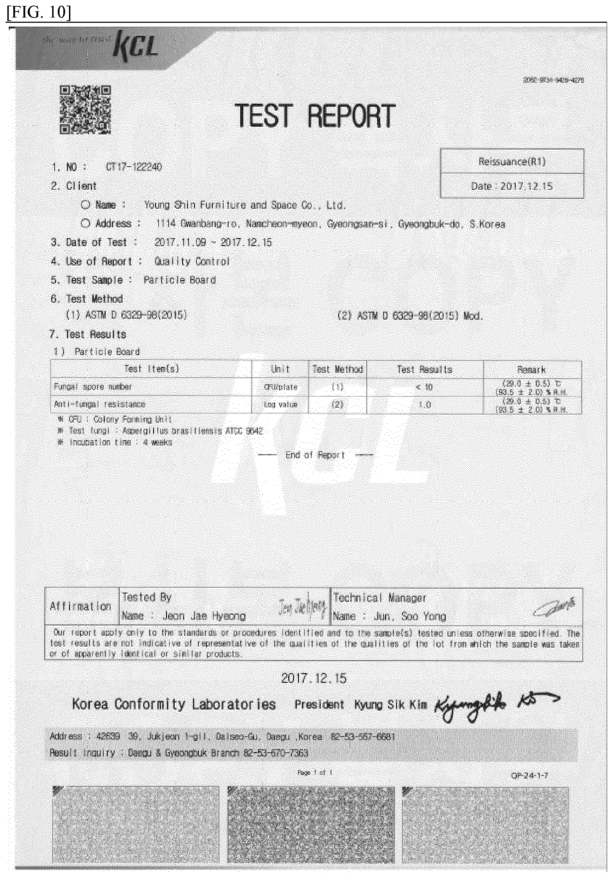

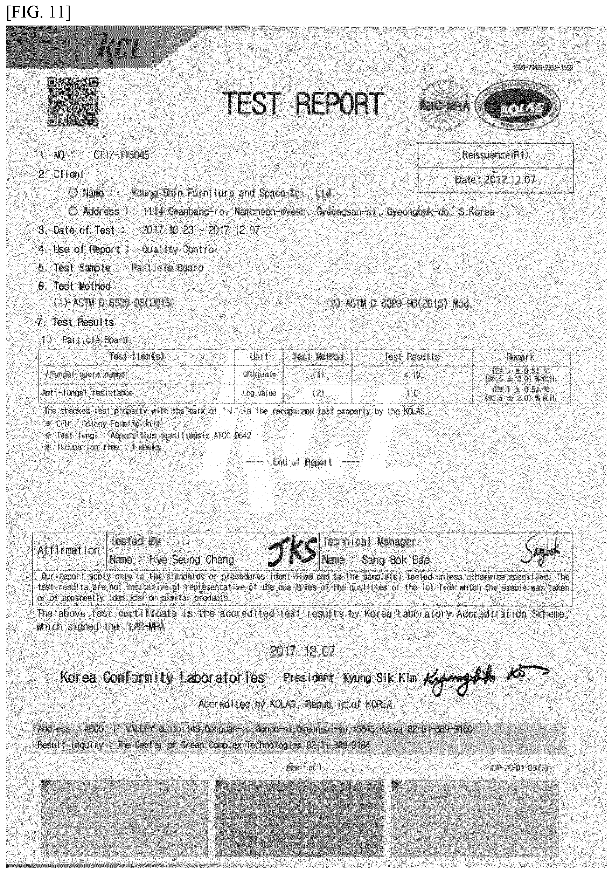

Tests to compare fungal resistance ratings/fungal resistance of the functional PBs of the comparative example and the present disclosure were conducted. The fungal resistance rating was determined in accordance with ASTM G21-15, and the fungal resistance was tested in accordance with ASTM D6329-98 (2015). As results, the comparative example exhibited a satisfactory fungal resistance rating of 0 (a reference value is 0 to 4) (FIG. 8) and a satisfactory fungal resistance of 1.0 or less (FIG. 10). The eco-friendly functional PB of the present disclosure exhibited a fungal resistance rating of 0 (FIG. 9) and a fungal resistance of 1.0 or less (FIG. 11), which were the same as those of the comparative example.

Since the melamine resin (manufactured by Taeyang Chemical) used as an adhesive in the PB of the comparative example contained 0.1% (1,000 ppm) of residual formaldehyde, there were difficulties in working and the workers suffered pain in the eyes, nose and throat. An aqueous formaldehyde solution is sold as a disinfectant, a bactericide, and a preservative in the market. Accordingly, the PB of the comparative example exhibits the same fungal resistance rating and fungal resistance, due to formaldehyde remaining at high-concentration of 0.1% (1,000 ppm) in the melamine resin solution, as those of the PB of the present disclosure.

### Example 5. Flame retardancy test result comparison of PB of comparative example and eco-friendly functional PB of the present disclosure

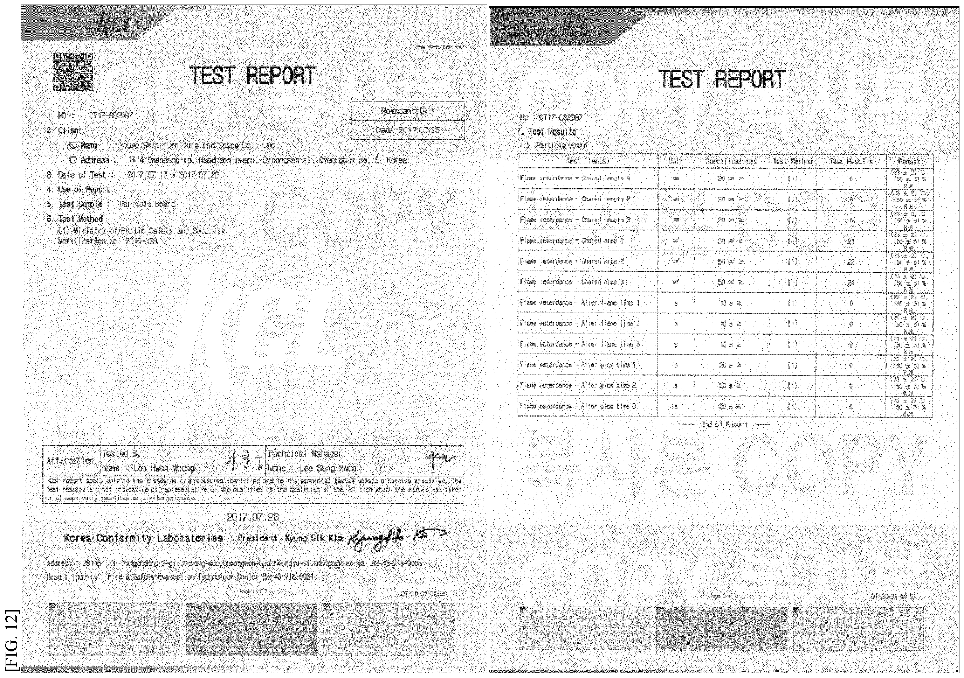

Flame retardancy of the PB of the comparative example and the eco-friendly functional PB of the present disclosure was tested in accordance with Ministry of Public Safety and Security Notification No. 2016-138. Results are shown in Table 3 below (FIG. 12).

**[Table 3]**

| Classification | Unit | Reference value | Test result | Remark |
|---|---|---|---|---|
| Carbonized length-1 | cm | 20 cm or less | 6 | (23) °C (50) % R.H. |
| Carbonized length-2 | cm | 20 cm or less | 6 | (23) °C (50) % R.H. |
| Carbonized length-3 | cm | 20 cm or less | 6 | (23) °C (50) % R.H. |
| Carbonized area-1 | cm² | 50 cm² or less | 21 | (23) °C (50) % R.H. |
| Carbonized area-2 | cm² | 50 cm² or less | 22 | (23) °C (50) % R.H. |
| Carbonized area-3 | cm² | 50 cm² or less | 24 | (23) °C (50) % R.H. |
| After-flame time-1 | s | 10 s or less | 0 | (23) °C (50) % R.H. |
| After-flame time-2 | s | 10 s or less | 0 | (23) °C (50) % R.H. |
| After-flame time-3 | s | 10 s or less | 0 | (23) °C (50) % R.H. |
| After-glow time-1 | s | 30 s or less | 0 | (23) °C (50) % R.H. |
| After-glow | s | 30 s or less | 0 | (23) °C |
| time-2 | | | | (50) % R.H. |
| After-glow time-3 | s | 30 s or less | 0 | (23) °C (50) % R.H. |

As shown in Table 3, test results of the PB manufactured according to the present disclosure were as follows: carbonized length: 6 cm, carbonized area: 16 cm², after-flame time: 0 sec, after-glow time: 0 sec. These values are far superior to legal reference values, such as a carbonized length of 20 cm or less, a carbonized area of 16 cm², an after-flame time of 0 sec, and an after-glow time of 0 sec. Accordingly, the PB of the present disclosure passed the flame retardancy test.

### Example 6. Smoke density comparison in non-flaming and flaming modes of PB of comparative example and eco-friendly functional PB of present disclosure

Tests to compare smoke densities in non-flaming and flaming modes of the PB according to the comparative example and the eco-friendly functional PB according to the present disclosure were conducted. Results are summarized in Table 4.

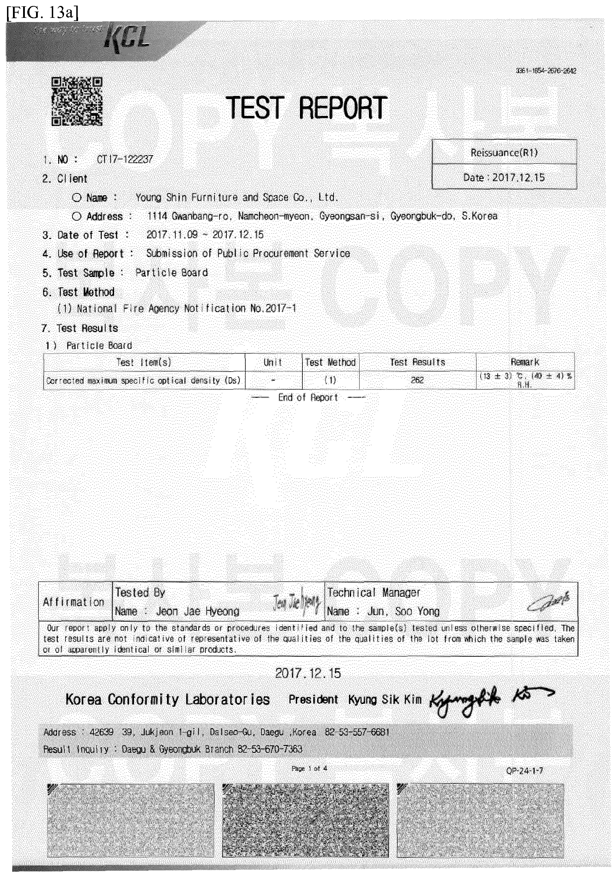

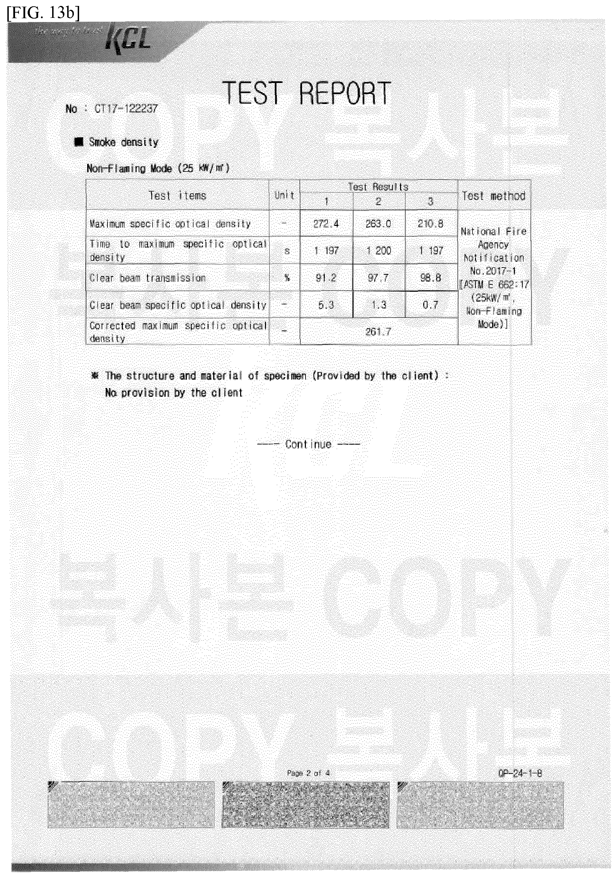

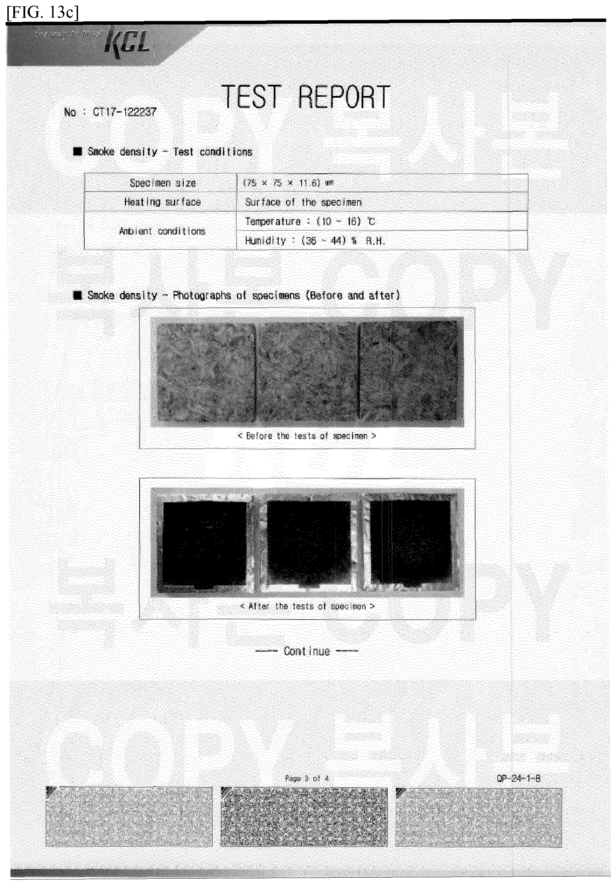

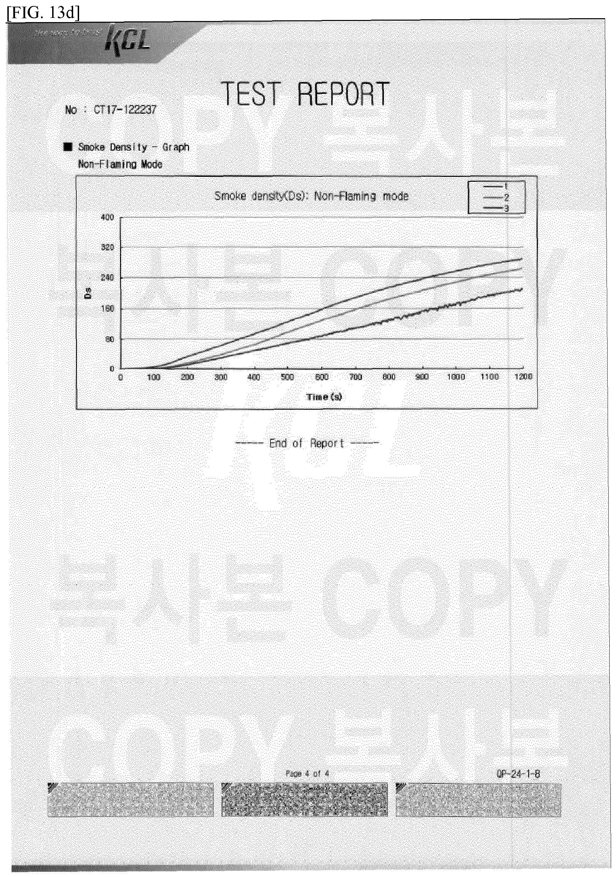

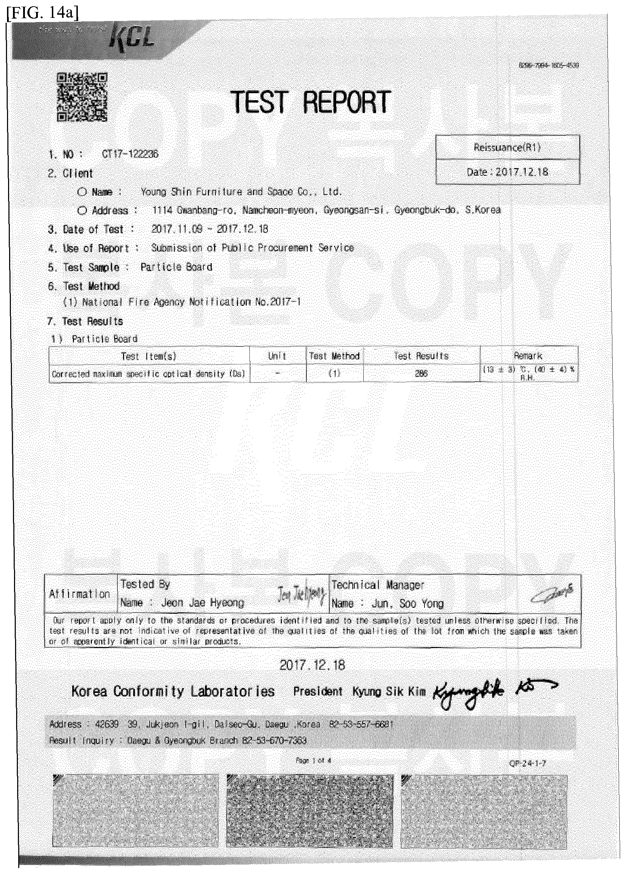

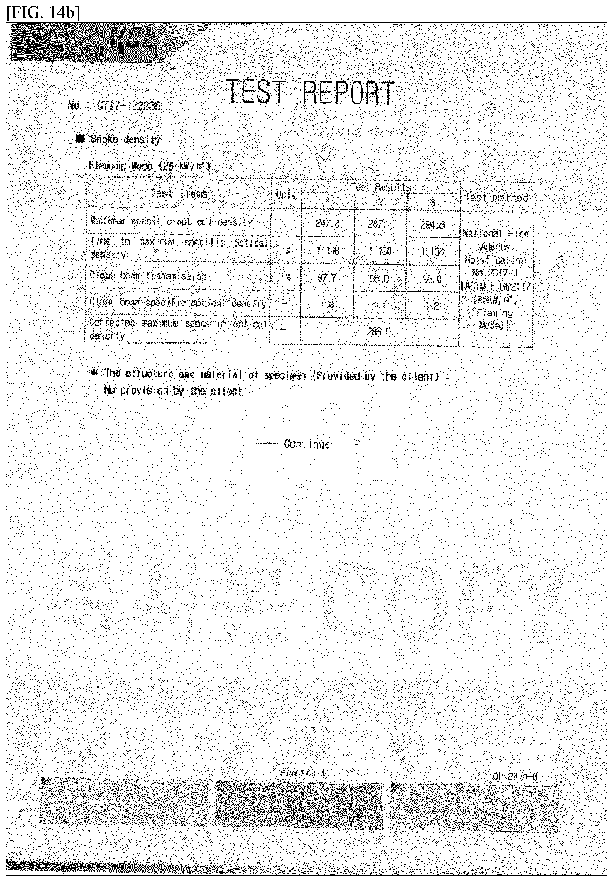

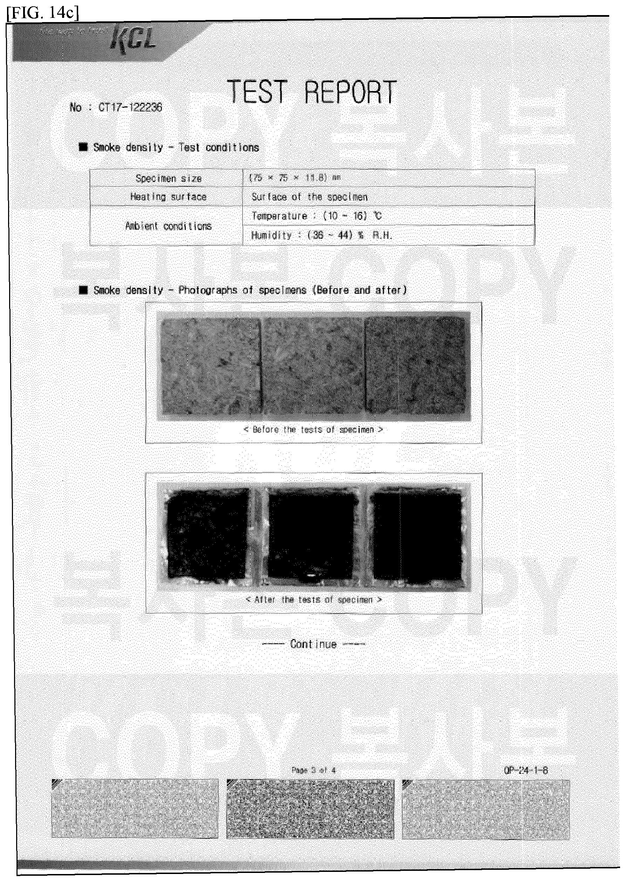

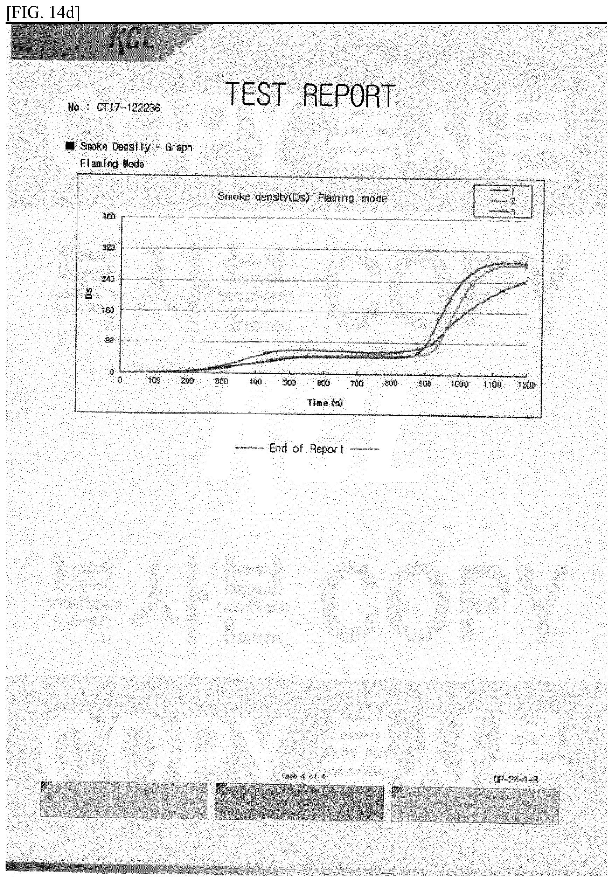

Tests to compare smoke densities in non-flaming and flaming modes of the PB according to the comparative example and the eco-friendly functional PB according to the present disclosure were conducted in accordance with National Fire Agency Notification No. 2017-1. As results, smoke densities in non-flaming and flaming modes of the PB of the comparative example were respectively 262 and 286, which were superior to a legal reference value of 400 or less (in both non-flaming and flaming modes) (FIG. 13). The eco-friendly functional PB of the present disclosure exhibited a smoke density of 263 in a non-flaming mode and a smoke density of 310 in a flaming mode, which were almost the same as those of the comparative example and were satisfactory compared to a legal reference value of 400 or less (in both non-flaming and flaming modes) (FIG. 14).

A small difference in smoke density between the PB of the comparative example and the eco-friendly functional PB of the present disclosure was determined to be caused by combustible materials such as a desiccant, a coupling agent, and a penetrant.

**[Table 4]**

| Comparative example | Test result | Eco-friendly functional PB | Test result |
|---|---|---|---|
| CT-17-122237 CT-17-122236 | In non-flaming mode: 262 In flaming mode: 286 | CT-17-115040 CT-17-115039 | In non-flaming mode: 263 In flaming mode: 310 |

### Example 7. Removal rate comparison of total volatile organic compounds (TVOCs), toluene, and formaldehyde in PB of comparative example and eco-friendly functional PB of present disclosure

Tests to compare removal rates of TVOCs, toluene, and formaldehyde in the PB of the comparative example and the eco-friendly functional PB of the present disclosure were conducted in accordance with the standard test method for indoor air quality test (Ministry of Environment Act 2017-11). Results are summarized in Table 5.

**[Table 5]**

| | Test result of PB of comparative example (mg/(m³, h)) | Test result of eco-friendly functional PB of present disclosure 1 mg/(m³, h) | Removal rate (%) | Remark |
|---|---|---|---|---|
| Total volatile organic compounds (TVOCs) | 0.350 | 0.089 | 75 | |
| Toluene | 0.001 | Not detected | 100 | |
| Formaldehyde | 0.885 | 0.038 | 96 | |

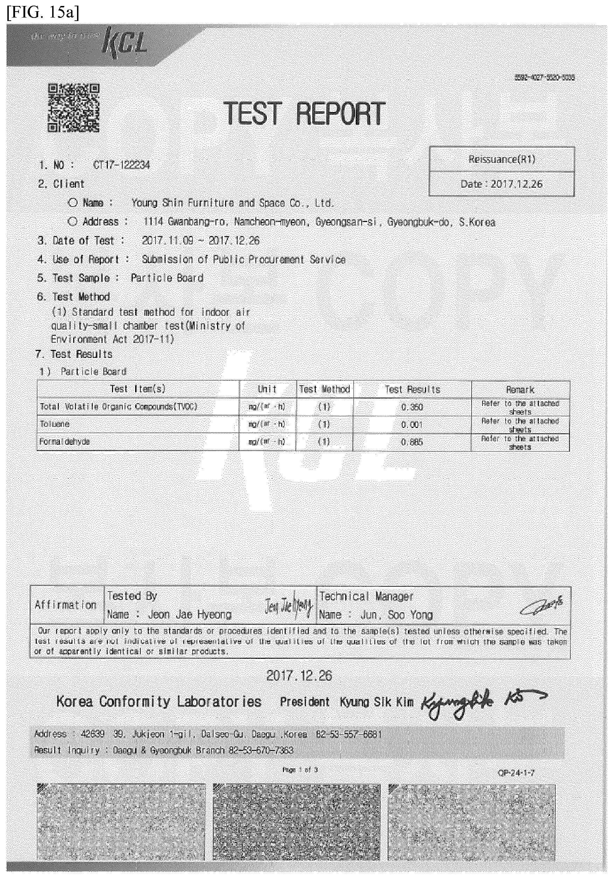

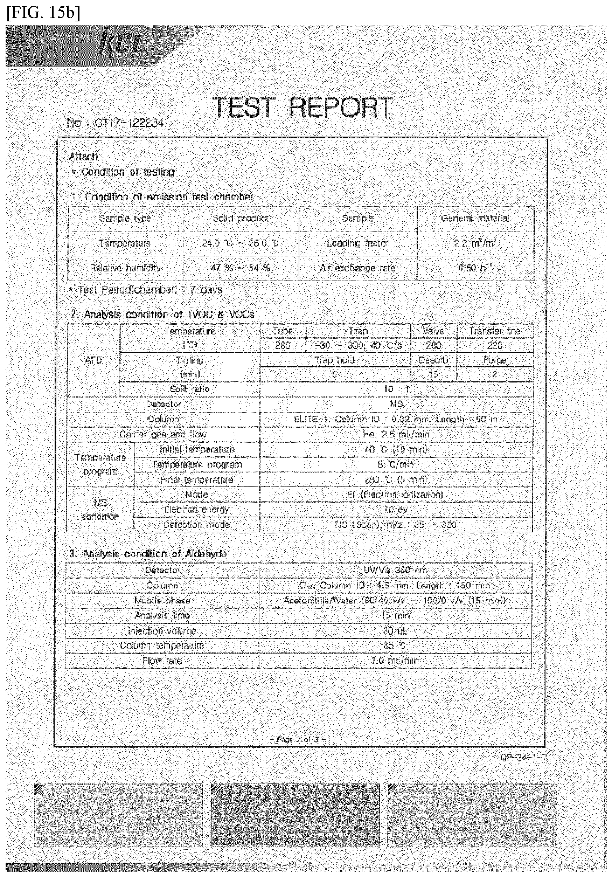

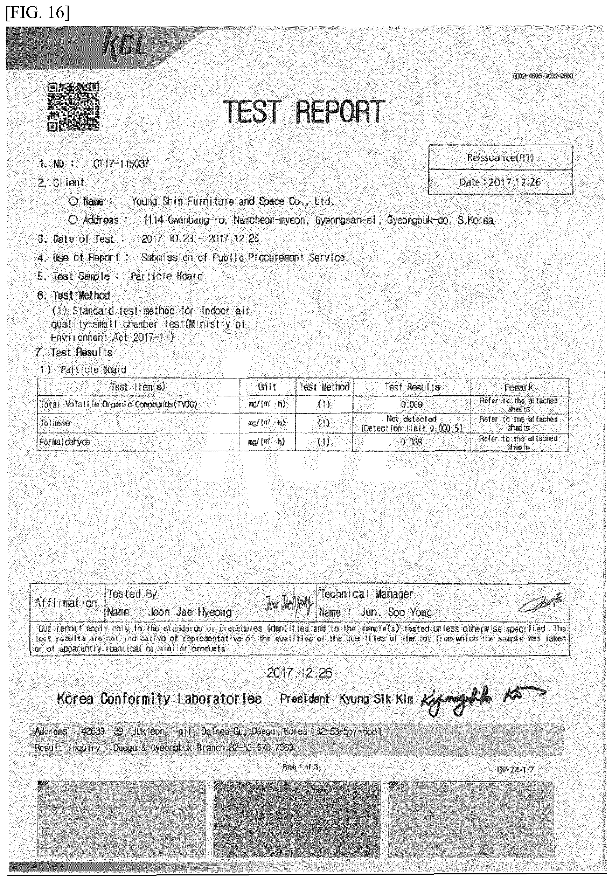

Test results of the PB of the comparative example were as follows: TVOCs: 0.350 mg/(m³, h), toluene: 0.001 mg/(m³, h), formaldehyde: 0.885 mg/(m³, h) (FIG. 15). Test results of the eco-friendly functional PB of the present disclosure were as follows: TVOCs: 0.089 mg/(m³, h), toluene: not detected, formaldehyde: 0.038 mg/(m³, h). Accordingly, the eco-friendly functional PB of the present disclosure exhibited a superior removal rate of 96% (FIG. 16).

In addition, the test results of the eco-friendly functional PB of the present disclosure were compared to reference values prepared by the Environmental Industrial Technology Institute and are summarized in Table 6.

**[Table 6]**

| | Test results of comparative example (mg/(m³, h)) | Test results of eco-friendly functional PB of present disclosure (mg/(m³, h)) | |
|---|---|---|---|
| Total volatile organic compounds (TVOC) | 0.4 | 0.089 | |
| Toluene | 0.080 | Not detected | |
| Formaldehyde | 0.12 | 0.038 | |

As shown in Table 6, the PB of the comparative example and the PB of the present disclosure were compared to reference values for office desks and chairs, student desks and chairs, and office cubicles, prepared by the Environmental Industrial Technology Institute. As a result, the PB of the present disclosure emitted 3.16 times less formaldehyde compared to the PB of the comparative example.

The eco-friendly functional PB was tested in an uncoated state without attachment of an "adhesive sheet" or "adhesive film." The antibacterial activity, fungal resistance, smoke density, and the like of the eco-friendly functional PB are considered to be affected by strong antibacterial activity, bactericidal properties, and preservative properties of unreacted residual formaldehyde in the melamine resin. In addition, a remover for removing TVOCs, toluene, and formaldehyde was injected into the uncoated plate, and the remover-injected plate exhibited a high removal rate thereof despite being a veneer panel.

### Example 9. Flatwise tensile strength comparison of PB of comparative example and eco-friendly functional PB of present disclosure

Tests to compare flatwise tensile strengths of the PB of the comparative example and the eco-friendly functional PB according to the present disclosure were conducted.

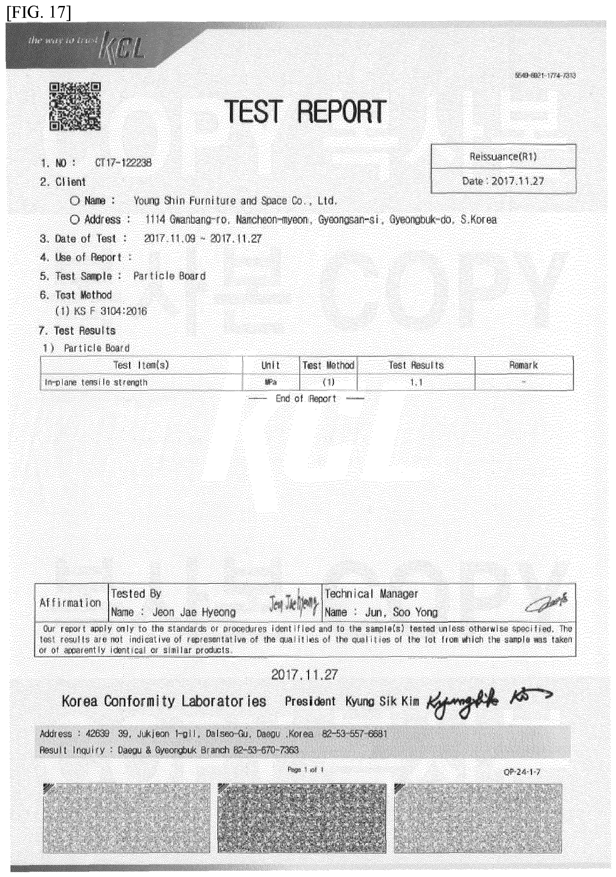

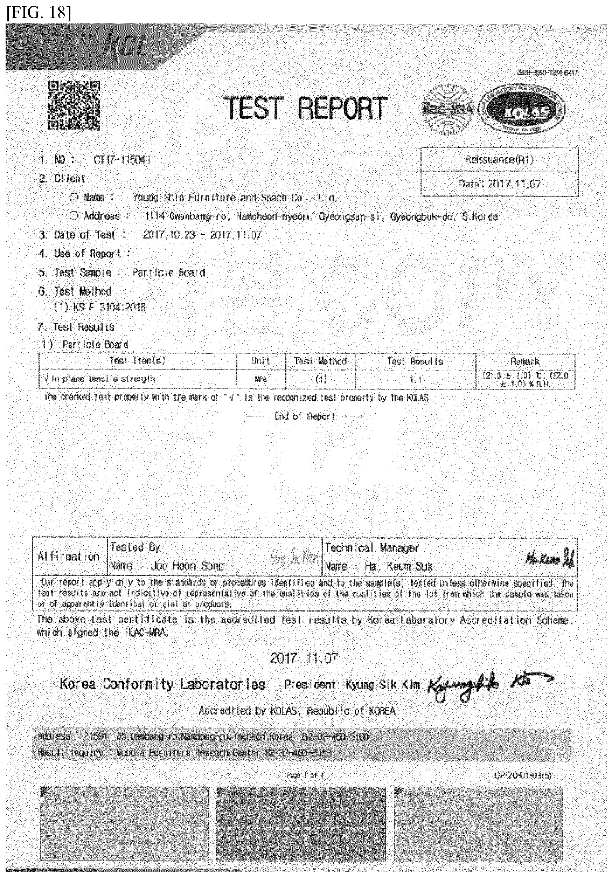

Flatwise tensile strengths of the PB of the comparative example and the eco-friendly functional PB according to the present disclosure were tested in accordance with KSF 3104:2016. As results, the comparative example exhibited a flatwise tensile strength of 1.1 MPa (FIG. 17), and the eco-friendly functional PB of the present disclosure exhibited a flatwise tensile strength of 1.1 MPa (FIG. 18), which was the same as that of the comparative example.

A flatwise tensile strength test is conducted to measure characteristics of a PB under stress. In particular, the flatwise tensile strength test is a vertical tensile test during which a tensile stress is applied to a specimen, and while the tensile stress is evenly distributed along the surface of the specimen, a force resisting the stress perpendicularly to the outermost surface of the specimen until the specimen is broken is measured.

As a result, the eco-friendly functional PB of the present disclosure exhibited a flatwise tensile strength 2.75 times greater than a legal reference value of 0.4 MPa. Accordingly, it can be confirmed that the adhesive strength among particle chips of the eco-friendly functional PB of the present disclosure is not decreased despite the addition of a melamine resin adhesive and foreign materials such as a flame retardant, an auxiliary flame retardant, a smoke suppressant, a PB strength reinforcing agent, a desiccant, an antibacterial agent, a coupling agent, a preservative, and a penetrant, and is similar to that of the PB of the comparative example manufactured according to a conventional method. From these results, it can be confirmed that the PB of the present disclosure has required properties as well as eco-friendliness.

As described above, by using the method of the present disclosure, an eco-friendly functional PB having complemented and improved antibacterial activity, pesticidal property, fungal resistance, odors, dehumidifying property, strength, and the like can be manufactured.

In addition, since the PB manufactured using the composition of the present disclosure has improved strength, problems such as generation of dust and fine dust particles due to breakage of the PB during woodworking can be addressed, and thus, a work environment is pleasant, resulting in productivity increase. The silver nanoparticles and titanium dioxide nanoparticles used to efficiently remove unpleasant odors and stop bacteria and mold propagation caused by the absorption of moisture by a PB and a subsequent decomposition of PB chips produce synergistic effects such as antibacterial activity and sterilization and deodorization functions, when used in combination.

Further, since smoke generation during combustion can be prevented and unreacted residual (free) formaldehyde in a melamine resin (or urea melamine resin) solution and volatile organic compounds (VOCs) emitted from an adhesive used to attach a sheet or film to a PB surface as finishing work can be removed, an excellent PB can be manufactured using the composition of the present disclosure.

The aforementioned description of the present disclosure is provided by way of example and those skilled in the art will understand that the present disclosure can be easily changed or modified into other specified forms without a change or modification of the technical spirit or essential characteristics of the present disclosure. Therefore, it should be understood that the aforementioned examples are only provided by way of example and not provided to limit the present disclosure.

## Claims

1. A composition for manufacturing an eco-friendly functional particle board, the composition comprising water, a melamine resin, a flame retardant, an auxiliary flame retardant, a smoke suppressant, a particle-board strength reinforcing agent, a desiccant, an antibacterial agent, a coupling agent, a preservative, and a penetrant,
wherein the melamine resin is comprised in an amount of 55 to 60% by weight,
the antibacterial agent is comprised in an amount of 1.5 to 2.5% by weight, and
the antibacterial agent comprises a silver nanoparticle solution and a titanium dioxide nanoparticle solution.

2. The composition according to claim 1, wherein the water is comprised in an amount of 10 to 15% by weight.

3. The composition according to claim 1, wherein the flame retardant is prepared by mixing ammonium polyphosphate and silane-coated ammonium polyphosphate in a ratio of 2 : 1, and the flame retardant is comprised in an amount of 20 to 25% by weight.

4. The composition according to claim 1, wherein the auxiliary flame retardant is ammonium sulfate and is comprised in an amount of 0.8 to 1.2% by weight.

5. The composition according to claim 1, wherein the smoke suppressant is prepared by mixing boric acid, zinc carbonate, and magnesium hydroxide in a weight ratio of 1 : 2 : 1 and is comprised in an amount of 0.6 to 0.9% by weight.

6. The composition according to claim 1, wherein the particle-board strength reinforcing agent is prepared by mixing aerogel and pyrophyllite in a volume ratio of 1 : 1 and is comprised in an amount of 0.5 to 0.9% by weight.

7. The composition according to claim 1, wherein the desiccant is a flowing paraffin wax and is comprised in an amount of 0.6 to 1% by weight.

8. The composition according to claim 1, wherein the antibacterial agent comprises a silver nanoparticle solution, which is comprised in an amount of 1.08% by weight in the composition, and a titanium dioxide nanoparticle solution, which is comprised in an amount of 0.94% by weight in the composition.

9. The composition according to claim 1, wherein the coupling agent is an acrylic phosphate-based coupling agent and is comprised in an amount of 0.75 to 0.9% by weight.

10. The composition according to claim 1, wherein the preservative is copper sulfate and is comprised in an amount of 0.9 to 1.2% by weight.

11. The composition according to claim 1, wherein the penetrant is alkyl succinate and is comprised in an amount of 0.8 to 1% by weight.

12. The composition according to claim 1, wherein the composition is prepared by stirring and dissolving at 1,200 rpm for 10 to 30 minutes and then aging at 20 to 30 °C for 6 to 10 hours.

13. An eco-friendly functional particle board manufactured using the composition according to claim 1.

14. The eco-friendly functional particle board according to claim 13, wherein the particle board is manufactured using a material selected from the group consisting of a particle-board material made of waste wood, a particle-board material made of a mixture of waste wood and straw, a particle-board material made of a mixture of waste wood and wheat straw, a particle-board material made of a mixture of waste wood and waste paper, a particle-board material made of a mixture of waste wood and coarse sawdust, a particle-board material made of a mixture of waste wood and silvergrass, a particle-board material made of a mixture of waste wood and bamboo, a particle-board material made of a mixture of waste wood and corn stover, and a particle-board material made of a mixture of waste wood and native grass.

15. The eco-friendly functional particle board according to claim 14, wherein a material mixed with the waste wood is mixed in an amount of 30% by weight based on the weight of the waste wood, and a weight ratio of the material to the waste wood is 2 : 8 to 3 : 7.

16. A method of manufacturing an eco-friendly functional particle board, the method comprising:
feeding particle-board chips into an automatic machine for mixing and coating, and then adding the composition according to claim 1 to the automatic machine in an amount of 32.50 to 48.70% by weight based on the weight of the particle-board chips and coating the particle-board chips with the composition for 5 to 10 minutes;
placing the coated particle-board chips in a hot press having an upper-plate temperature of 100 to 120 °C and a lower-plate temperature of 110 to 155 °C and subjecting the same to thermal pressing at 60 to 80 kgf/cm² for 5 to 10 minutes; and
performing drying at room temperature for 1 to 3 days, after completing the thermal pressing.
